# EUROPÄISCHE PATENTSCHRIFT

(11) **EP 2 419 614 B1**
(45) Veröffentlichungstag und Bekanntmachung des Hinweises auf die Patenterteilung: **24.12.2014**
(21) Anmeldenummer: 10713845.5
(22) Anmeldetag: 12.04.2010
(51) Int. Cl.: F02B 29/04, F02D 9/16

(54) **LADELUFTKANAL FÜR EINEN VERBRENNUNGSMOTOR**
CHARGE AIR DUCT FOR AN INTERNAL COMBUSTION ENGINE
CANAL D'AIR DE SURALIMENTATION POUR MOTEUR À COMBUSTION INTERNE

(30) Priorität: 17.04.2009 DE 102009017555; 10.06.2009 DE 102009025036; 12.03.2010 DE 102010011372; 12.03.2010 DE 102010011373
(43) Veröffentlichungstag der Anmeldung: 22.02.2012
(73) Patentinhaber: Behr GmbH & Co. KG, 70469 Stuttgart (DE); MANN+HUMMEL GmbH, 71638 Ludwigsburg (DE)
(72) Erfinder: DIEM, Johannes, 71287 Weissach (DE); DEHNEN, Ulrich, 70806 Kornwestheim (DE); REHMANN, Achim, 75249 Kieselbronn (DE); HUURDEMAN, Bernhard, 71691 Freiberg a.N. (DE); HUMMEL, Karl-Ernst, 74321 Bietigheim-Bissingen (DE)
(74) Vertreter: Grauel, Andreas
(86) Internationale Anmeldenummer: PCT/EP2010/002246
(87) Internationale Veröffentlichungsnummer: WO 2010/118847

(56) Entgegenhaltungen:
- EP-A2- 1 845 242
- WO-A1-2005/019619
- WO-A1-2007/097750
- DE-A1- 4 240 239
- DE-A1-102006 057 488
- DE-A1-102007 040 661
- FR-A1- 2 916 020
- FR-A1- 2 920 853
- JP-A- 60 050 225
- JP-A- 61 061 916
- US-A- 5 911 212
- US-A1- 2002 195 086

## Beschreibung

Die Erfindung betrifft einen Ladeluftkanal für einen Verbrennungsmotor nach dem Oberbegriff des Anspruchs 1.

DE 10 2007 040 661 A1 beschreibt ein Saugrohr für einen Verbrennungsmotor, in das ein kühlmitteldurchströmter Wärmetauscher zur Kühlung von Ladeluft integriert ist. Mittels einer ersten Stellklappe kann ein Ladeluftstrom einstellbar durch den Wärmetauscher oder einen Bypasskanal geleitet werden. Eine zweite, separate Stellklappe erfüllt zudem die Funktion einer Drosselklappe. DE 42 40 239 A1, JP 60 050 225 A und WO 2005/019 619 A1 offenbaren weitere Ladeluftkühler mit Bypass.

Es ist die Aufgabe der Erfindung, einen Ladeluftkanal mit einem Wärmetauscher zur Kühlung der Ladeluft anzugeben, der mit einfachen Mitteln eine Anpassung an verschiedene Betriebssituationen erlaubt.

Diese Aufgabe wird für einen eingangs genannten Ladeluftkanal erfindungsgemäß mit den kennzeichnenden Merkmalen des Anspruchs 1 gelöst. Durch die Anordnung des Bypass ist eine Betriebsart ermöglicht, bei der die Ladeluft nur den ersten Wärmetauscher, nicht aber den zweiten Wärmetauscher umgeht. Somit verbleibt noch eine Kühlung der Ladeluft durch den zweiten Wärmetauscher, wobei aber zugleich ein verringerter Druckabfall ermöglicht ist. Eine solche Umgehung nur des ersten Wärmetauschers ist insbesondere, aber nicht notwendig bei einem Teillastbetrieb des Verbrennungsmotors vorteilhaft.

In bevorzugter Weiterbildung kann eine Integration der Funktionen vorliegen, wobei mittels nur eines einzigen Stellglieds die Anpassung der Ladeluftführung an verschiedene Betriebsbedingungen vorgenommen werden kann. Insbesondere sind dies im Fall eines Dieselmotors ein Normalbetrieb (Abgasführung über beide Wärmetauscher), ein Kaltstartbetrieb und/oder ein Teillastbetrieb (Abgasführung über den Bypass bzw. nur den zweiten Wärmetauscher) und ein Drosselbetrieb (zum Beispiel für eine Regeneration eines Partikelfilters und/oder ein Abstellen des Motors). Unter Ladeluft im Sinne der Erfindung wird dabei verdichtete Luft sowohl mit als auch ohne Beimengungen von rückgeführtem Abgas verstanden. Die Erfindung ist bevorzugt bei Dieselmotoren einsetzbar, kann aber je nach Anforderungen auch für Ottomotoren oder andere Verbrennungsmotoren eingesetzt werden.

Bei einer besonders bevorzugten Ausführungsform der Erfindung ist es vorgesehen, dass der erste Wärmetauscher als Hochtemperatur-Wärmetauscher (HT) und der zweite Wärmetauscher als Niedertemperatur-Wärmetauscher (NT) ausgebildet ist. Dies ermöglicht bei Volllast bzw. Führung über beide Wärmetauscher eine besonders effektive Kühlung. Zugleich kann bei Übergang zum Teillastbetrieb schnell und unmittelbar die Umgehung des HT-Wärmetauschers erfolgen, so dass keine Aufwärmung der Ladeluft erfolgen kann.. Insbesondere kann eine Regelstrategie zur Schaltung des Stellglieds vorliegen, bei der die Temperatur der einströmenden Ladeluft mit der eines Kühlfluids des HT-Wärmetauschers verglichen wird und bei Unterschreiten eine entsprechende Umleitung durch den Bypass erfolgt.

Ein Hochtemperatur-Wärmetauscher wird dabei typisch, aber nicht notwendig von Motor-Kühlmittel von üblichen Betriebstemperaturen von z.B. 90 °C durchstromt, während der Niedertemperatur-Wärmetauscher von kälterem Kühlmittel zum Beispiel eines Niedertemperaturzweigs des Kühlsystems durchströmt wird. Insgesamt kann hierdurch verhindert werden, dass bei Betriebsbedingungen wie etwa einem Teillastbereich bei betriebswarmem Motor die Ladeluft zunächst durch den ersten Wärmetauscher aufgeheizt würde. Im Teillastbereich kann die Ladeluft den Verdichter durchaus mit Temperaturen unterhalb der Hauptkühlmitteltemperatur bzw. unterhalb von 90 °C verlassen. Auf diese Weise kann der Wirkungsgrad der Ladeluftkühlung und somit des Verbrennungsmotors im Teillastbereich verbessert werden.

Es besteht dabei eine mögliche, aber nicht notwendige Ausführungsform der Erfindung darin, dass der Ladeluftkanal ausschließlich über einen dergestalt geführten Bypass verfügt, so dass die Ladeluft immer zumindest durch den weiteren Wärmetauscher geführt ist.

Bei einer allgemein vorteilhaften Weiterbildung der Erfindung ist zudem ein zweiter Bypass vorgesehen, wobei der zweite Bypass stromabwärts des zweiten Wärmetauschers mündet. Hierdurch kann bei Bedarf, zum Beispiel beim Kaltstart oder anderen spezifischen Betriebsbedingungen, eine vollständige Umgehung der beiden Wärmetauscher erfolgen. Besonders bevorzugt kann dies in Verbindung mit einer Abgas-Rückführung erfolgen, so dass ein vor allem unter Kaltstartbedingungen besonders kritischer Anfall von Kondensat an den Wärmetauschern vermieden werden kann. Besonders bevorzugt kann dies in Verbindung mit einer Abgas-Rückführung erfolgen, so dass ein vor allem unter Kaltstartbedingungen besonders kritischer Anfall von Kondensat an den Wärmetauschern vermieden werden kann. In bevorzugter Detailgestaltung ist in weiterer Integration der Funktionen vorgesehen, dass die Ladeluft in einer dritten Stellung des Stellglieds von dem Eintritt zu dem zweiten Bypass strömt. Alternativ hierzu kann aber auch ein zusätzliches Stellglied zur Schaltung des zweiten Bypasses vorgesehen sein, wobei zum Beispiel der zweite Bypass als absperrbare Verlängerung des ersten Bypasses ausgebildet ist.

Bei einer allgemein bevorzugten Ausführungsform der Erfindung ist der Ladeluftkanal als Saugrohr des Verbrennungsmotors ausgebildet. Auf diese Weise wird eine kompakte integrierte Einheit mit Wärmetauscher und Stellglied geschaffen, die unmittelbar an einen Zylinderkopf des Motors angebracht werden kann und eine Kühlung und nach Betriebsart unterschiedliche Ladeluftführung erlaubt.

Bei einer bevorzugten Ausführungsform ist das Stellglied in einem bevorzugt im Wesentlichen zylindrischen Kanal angeordnet, wobei in möglicher Detailgestaltung der Ladeluftstrom im Bereich des Kanals um etwa 90°umgelenkt wird. Eine solche Anordnung des Stellglieds ermöglicht große Ladeluftdurchsätze bei kleiner raumsparender Bauform.

In besonders bevorzugter Ausführungsform der Erfindung ist es vorgesehen, dass das Stellglied als um eine Achse drehbare Walze ausgebildet ist. Dies ermöglicht eine kompakte und zuverlässige Bauweise. Die Walze kann zum Beispiel als Hohlwalze ausgebildet sein, wobei der Ladeluftstrom in axialer Richtung in die Walze eintritt und durch eine radiale Öffnung in der Walzenwand austritt. Je nach Stellung der Walze in Drehrichtung überdeckt dabei die Öffnung ganz, teilweise oder gar nicht mit einer Zuführung zu dem Wärmetauscher oder auch einer Öffnung des Bypasses.

Weiterhin bevorzugt hat das Stellglied eine Sperrfläche, wobei die Sperrfläche eine geometrische Struktur zur Reduzierung des Durchtrittsquerschnitts hat. Eine solche geometrische Struktur kann etwa als gezahnte Kante des Stellglieds, zum Beispiel einer Kante der Öffnung einer Hohlwalze, ausgebildet sein oder auch als definierte Durchbrechungen im Bereich der Kante. Die Wand der Hohlwalze bildet dabei die Sperrfläche aus. Hierdurch kann insbesondere eine genaue Einstellung eines Durchtrittsquerschnitts mittels des Stellglieds erfolgen. Zudem wird es ermöglicht, durch die geometrische Struktur einen nicht linearen Zusammenhang zwischen dem Durchtrittsquerschnitt und einer Bewegung des Stellglieds zu schaffen. Besonders gut wird das Stellglied durch solche Maßnahmen auch als Drosselklappe eines Ottomotors verwendbar, bei dem allgemein besonders hohe Anforderungen an die Genauigkeit des eingestellten Durchtrittsquerschnitts bestehen.

Bei einer kompakten und effektiven Bauform eines erfindungsgemäßen Ladeluftkanals hat das Gehäuse einen Umlenkbereich zur U-förmigen Umlenkung der Ladeluft, wobei der Umlenkbereich in bevorzugter Detailgestaltung stromabwärts des Wärmetauschers und stromaufwärts eines weiteren Wärmetauschers angeordnet ist. Neben einer guten Nutzung des im Motorraum zur Verfügung stehenden Bauraums kann dabei zudem eine zweistufige Auslegung der Ladeluftkühlung durch separate Wärmetauscher erfolgen. Alternativ kann es sich bei dem Wärmetauscher und dem weiteren Wärmetauscher auch um verschiedene Abschnitte eines einzelnen Wärmetauschers handeln.

Allgemein bevorzugt ist das Gehäuse aus zumindest zwei Gehäuseteilen aufgebaut. Die Gehäuseteile können nach einer Montage miteinander verschweißt werden oder auch verschraubt oder auf sonstige Art aneinander festgelegt sein. Die Gehäuseteile können bevorzugt aus einem Kunststoff, zum Beispiel einem Polyamid, bestehen.

Zur weiteren Optimierung ist an dem Gehäuse ein Zuganker vorgesehen, wobei durch den Zuganker eine Versteifung einer Gehäusewand im Bereich einer Dichtung des Stellglieds bewirkt ist. Hierdurch wird auch unter Vibrationen und/oder hohen Temperaturen und Drücken eine Leckage im Bereich der Dichtung verhindert.

Bei einer vorteilhaften Detailgestaltung liegt das Stellglied an zumindest einer Dichtung gleitend an, um einen Leckstrom der Ladeluft durch einen je nach Stellung des Stellglieds ungewünschten Pfad zu verhindern. Zweckmäßig kann dabei die Dichtung an das Gehäuse angegossen sein.

Allgemein vorteilhaft ist das Gehäuse zumindest abschnittsweise mehrwandig ausgebildet, wobei in möglicher Detailgestaltung ein Kühlmittel zwischen den Gehäusewänden strömt. Alternativ oder ergänzend zur Durchströmung mit einem Kühlmittel kann auch ein Hitzschutzblech, zum Beispiel aus Metall, vorgesehen sein. Allgemein ermöglicht dies die Verwendung von kostengünstigen Kunststoffen wie etwa Polyamiden für das Gehäuse selbst dann, wenn in bestimmten Bereichen Ladelufttemperaturen von über 200 °C vorkommen.

Bei einer weiteren Ausführungsform der Erfindung ist das Gehäuse über zwei insbesondere parallelen Reihen von Verschraubungen an dem Verbrennungsmotor festlegbar, wobei in bevorzugter, aber nicht notwendiger Detailgestaltung zumindest eine der Verschraubungen einen Teil des Gehäuses durchgreift. Hierdurch ist eine Festlegung zum Beispiel am gaseinlassseitigen Flansch des Verbrennungsmotors unter besonders wenig Verspannung ermöglicht.

Bei einer allgemein bevorzugten Variante ist zumindest einer der Wärmetauscher zwischen den parallelen Reihen von Verschraubungen angeordnet, so dass er platzsparend angeordnet und gut gegen Vibrationen abgestützt ist. Es können auch beide Wärmetauscher zwischen den parallelen Reihen von Verschraubungen angeordnet sein. Je nach Anforderungen an den Bauraum kann der zweite Wärmetauscher aber auch außerhalb der Reihen von Verschraubungen angeordnet sein, zum Beispiel oberhalb einer oberen Verschraubungsreihe oder unterhalb einer unteren Verschraubungsreihe. Zudem wird hierdurch eine größere Bauhöhe des außerhalb der Verschraubungsreihen angeordneten Wärmetauschers ermöglicht. Allgemein ist es bei allen genannten Anordnungen vorteilhaft, dass keine Verschraubung den Bereich des Netzes bzw. der aktiven Kühlfläche eines Wärmetauschers durchgreift, da dies für viele Bauarten von Wärmetauschern eher aufwendig zu realisieren ist.

Bei je nach Bauraumanforderungen bevorzugten Abwandlungen können die Wärmetauscher entweder eine unterschiedliche Länge oder auch eine gleiche Länge quer zu der Strömungsrichtung aufweisen. Eine gleiche Länge ist vorteilhaft in Bezug auf ein Gleichteilekonzept und auf eine Vergleichmäßigung der Strömungswiderstände an den Wärmetauschern. Eine Bauform mit verschiedener Wärmetauscherlänge ermöglicht eine besonders optimale Ausnutzung von gegebenen Bauräumen.

Allgemein vorteilhaft im Interesse einer kompakten, kurzbauenden Ausgestaltung ist es vorgesehen, dass der Ladeluftstrom nach dem stromaufwärtigen der beiden Wärmetauscher und vor dem stromabwärtigen der beiden Wärmetauscher eine Umlenkung, insbesondere um 180°, erfährt. Bei einer vorteilhaften Weiterbildung kann der Ladeluftstrom nach dem stromabwärtigen der beiden Wärmetauscher eine weitere Umlenkung erfahren. Bei einer ersten Detailgestaltung kann dies in Form einer um das Stellglied gebogenen Führung erfolgen. Bei einer alternativen oder ergänzenden Detailgestaltung erfolgt die Umlenkung um wenigstens 90°. Die Folge von Umlenkungen kann insgesamt zum Beispiel einen U-flow Wärmetauscher oder auch einen S-flow-Wärmetauscher ausbilden. Die Drehrichtung der Umlenkungen des Ladeluftstroms kann bei beiden der vorgenannten Detailgestalfungen im Verlauf des Ladeluftkanals das Vorzeichen wechseln, wodurch eine gute Durchmischung der die Wärmetauscher verlassenen Luft bei geringem oder kaum vorhandenem Druckabfall erzielt wird.

Bei bevorzugten Ausführungsformen der Erfindung beträgt die Anzahl der Verschraubungen entweder vier, bevorzugt zum Anschluss an einen Dreizylindermotor, oder fünf, bevorzugt zum Anschluss an einen Vierzylindermotor. Hierdurch wird die Anzahl an Verschraubungen möglichst gering gehalten, wobei zugleich eine verspannungsfreie und sichere Halterung des Ladeluftkanals am Verbrennungsmotor gegeben ist.

Zur einfachen und sicheren Montage ist es vorgesehen, dass eine Ausnehmung für die das Gehäuse durchgreifende Verschraubung materialeinheitlich einstückig mit dem Gehäuse ausgebildet ist. Je nach Bauraum kann die Ausnehmung in Form einer Rinne oder eines Tunnels ausgebildet sein, wobei auch beide Varianten an dem gleichen Ladeluftkanal vorhanden sein können. Die Herstellung einer solchen Ausnehmung kann im Zuge eines Spritzgussverfahrens erfolgen, mit dem ein Teil oder das gesamte Gehäuse aus Kunststoff hergestellt wird. Grundsätzlich ist auch ein anderes Gehäusematerial als Kunststoff, zum Beispiel Aluminium, denkbar.

Bei einer allgemein bevorzugten Ausführungsform umfasst der Wärmetauscher einen Stapel von Flachrohren, wobei die Flachrohre von einem kühlenden Fluid durchströmt und von der Ladeluft umströmt werden. Die Flachrohre können etwa zwischen einem oberen und einem unteren Kasten angeordnet sein. Bevorzugt sind einem der Kästen beide Anschlüsse für das die Flachrohre durchströmende Kühlmittel vorgesehen. Flachrohre, zwischen den Flachrohren gegebenenfalls vorgesehene Rippen, Kästen und je nach Anforderungen auch die Kühlmittelanschlüsse können als gemeinsam kassetierter Aluminium-Wärmetauscher in einem Lötofen verlötet werden.

Bei einem allgemein bevorzugten Ausführungsbeispiel ist zusätzlich zu dem Stellglied ein Drosselglied vorgesehen. Besonders bevorzugt ist durch das Drosselglied eine vollständige Absperrung der Ladeluft einstellbar. Eine solche vollständige Absperrung kann zum Beispiel dem sicheren Abstellen eines Dieselmotors dienen. Zudem kann das Drosselglied zur Bereitstellung eines ausreichenden Unterdrucks etwa für eine Abgas-Rückführung im Teillastbereich unterstützend wirken. Allgemein kann dabei seitens des Stellglieds auf die Möglichkeit einer starken Drosselung oder auch nur einer vollständigen Absperrung des Ladeluftstroms verzichtet werden, wodurch sich der bauliche Aufwand bezüglich einer Abdichtung des Stellglieds verringert. Insbesondere bei Ausbildung des Stellglieds in Walzenform kann seine Bauweise hierdurch einfach gehalten werden.

Bei einer weiteren möglichen Ausführungsform mit zwei Wärmetauschern ist es vorteilhaft vorgesehen, dass in einer vierten Stellung des Stellglieds die Ladeluft von dem Eintritt zu einem zweiten Bypass geführt ist, wobei der zweite Bypass stromabwärts des weiteren Wärmetauschers mündet. Hierdurch ist es möglich, bei entsprechenden Betriebsbedingungen wie etwa einem Kaltstart eine vollständige Umgehung der Wärmetauscher bzw. der Ladeluftkühlung einzustellen. Je nach Anforderungen an den Bauraum kann es bei einer Ausführungsform mit zwei Wärmetauschern vorgesehen sein, dass das Stellglied im Wesentlichen in einer Ebene mit den beiden Wärmetauschern angeordnet ist, insbesondere zudem in einer Ebene mit dem Austritt des Ladeluftkanals. In einer solchen Anordnung ist die Führung von Verschraubungen zur Festlegung des Ladeluftkanals an dem Verbrennungsmotor besonders einfach realisierbar.

In hierzu alternativer Ausgestaltung kann es auch vorgesehen sein, dass die beiden Wärmetauscher und der Austritt im Wesentlichen in einer Ebene angeordnet sind, wobei das Stellglied außerhalb dieser Ebene, insbesondere vollständig oberhalb oder vollständig unterhalb der Ebene, angeordnet ist. Eine solche Bauform ist besonders kompakt und kurzbauend, so dass der in vielen Fällen neben dem Verbrennungsmotor für einen Ladeluftkanal zur Verfügung stehende Bauraum optimal genutzt werden kann.

Weitere Vorteile und Merkmale der Erfindung ergeben sich aus dem nachfolgend beschriebenen Ausführungsbeispiel sowie aus den abhängigen Ansprüchen.

Nachfolgend wird ein Ausführungsbeispiel der Erfindung beschrieben und anhand der anliegenden Zeichnungen näher erläutert.
- Fig. 1: zeigt eine schematische Darstellung eines ersten Ausführungsbeispiels eines erfindungsgemäßen Ladeluftkanals.
- Fig. 2: zeigt eine schematische Darstellung eines zweiten Ausführungsbeispiels eines erfindungsgemäßen Ladeluftkanals.
- Fig. 3: zeigt eine schematische Schnittansicht durch eine detaillierte Ausführung eines Ladeluftkanals gemäß Fig. 1 in einer ersten Stellung eines Stellglieds.
- Fig. 4: zeigt eine Schnittansicht entlang der Linie A-A aus Fig. 3.
- Fig. 5: zeigt eine räumliche Ansicht eines weiteren Ausführungsbeispiels der Erfindung.
- Fig. 6: zeigt eine weitere räumliche Ansicht des Ausführungsbeispiels aus Fig. 5.
- Fig. 7: zeigt eine seitliche Draufsicht auf das Ausführungsbeispiel aus Fig. 5.
- Fig. 8: zeigt eine Draufsicht von oben auf das Ausführungsbeispiel aus Fig. 5.
- Fig. 9: zeigt eine Draufsicht von vorne auf das Ausführungsbeispiel aus Fig. 5.
- Fig. 10: zeigt eine räumliche Ansicht eines weiteren Ausführungsbeispiels der Erfindung.
- Fig. 11: zeigt eine Draufsicht von oben auf das Ausführungsbeispiel aus Fig. 10.
- Fig. 12: zeigt eine erste seitliche Draufsicht auf das Ausführungsbeispiel aus Fig. 10.
- Fig. 13: zeigt eine zweite seitliche Draufsicht auf das Ausführungsbeispiel aus Fig. 10.
- Fig. 14: zeigt eine räumliche Ansicht eines weiteren Ausführungsbeispiels der Erfindung.
- Fig. 15: zeigt eine Draufsicht von oben auf das Ausführungsbeispiel aus Fig. 14.
- Fig. 16: zeigt eine erste seitliche Draufsicht auf das Ausführungsbeispiel aus Fig. 14.
- Fig. 17: zeigt eine zweite seitliche Draufsicht auf das Ausführungsbeispiel aus Fig. 14.

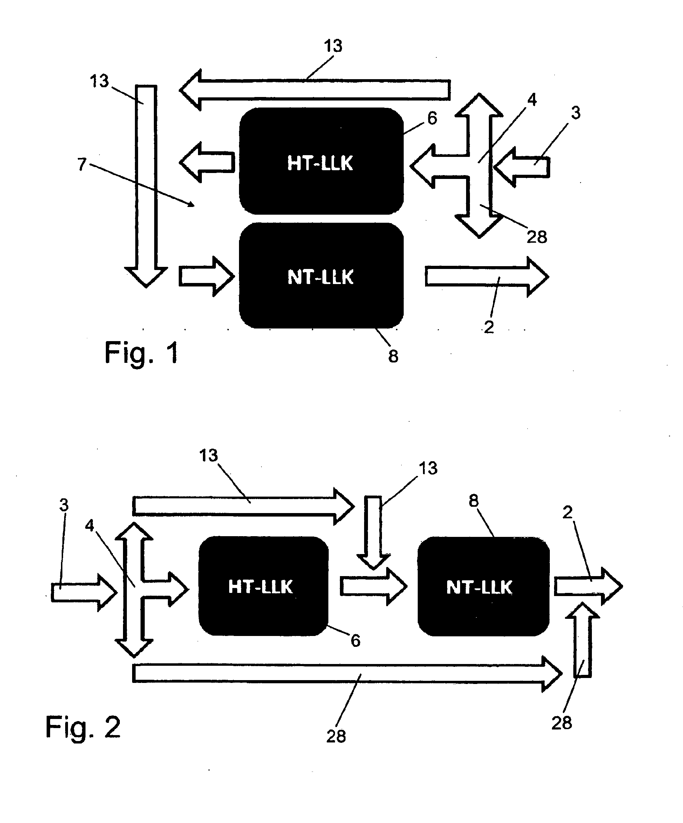

Fig. 1 zeigt eine schematische Darstellung eines ersten Ausführungsbeispiels, bei dem ein erfindungsgemäßer Ladeluftkanal einen ersten Wärmetauscher 6 und einen zweiten Wärmetauscher 8 umfasst. Der erste Wärmetauscher 6 ist als Hochtemperatur-Ladeluftkühler (HT-LLK) und der zweite Wärmetauscher 8 als Niedertemperatur-Ladeluftkühler (NT-LLK) ausgebildet. Im Beispiel nach

Fig. 1 sind die beiden Wärmetauscher 6, 8 übereinander angeordnet, wobei die Ladeluft bei einer Strömung vom ersten zum zweiten Wärmetauscher eine Umkehrung um 180° in einem Umlenkbereich 7 erfährt.

Von einem Eintritt 3 wird die Ladeluft durch ein Stellglied 4 je nach Stellung über verschiedene Wege geleitet.

In einer ersten Stellung wird die Ladeluft zu dem ersten Wärmetauscher 6 und nachfolgend durch den Umlenkbereich 7 zu dem zweiten Wärmetauscher 8 geleitet.

In einer zweiten Stellung wird die Ladeluft zu einem ersten Bypass 13 geleitet, durch den der erste Wärmetauscher 6 umgangen wird, so dass der Bypass 13 stromaufwärts des zweiten Wärmetauschers 8 mündet.

In einer dritten Stellung des Stellglieds 4 wird die Ladeluft zu einem zweiten Bypass 28 geleitet, der stromabwärts beider Wärmetauscher 6, 8 in einen Sammlerbereich 2 des Ladeluftkanals mündet.

Fig. 2 zeigt eine zweite schematische Ausführungsform, bei der im Unterschied zu Fig. 1 die beiden Wärmetauscher 6, 8 in einer Ebene hintereinander angeordnet sind. Hierdurch entfällt der Umlenkbereich 7 zwischen den beiden Wärmetauschern 6, 8.

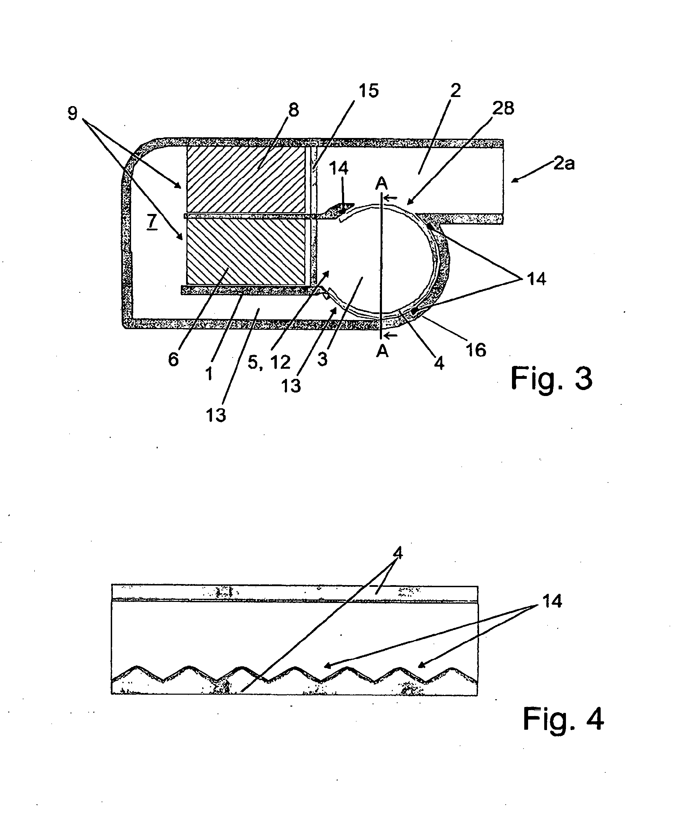

Fig. 3 zeigt ein beispielhafte konstruktive Realisierung eines Ladeluftkanal gemäß Fig. 1. Der Ladeluftkanal nach Fig. 3 bis Fig. 4 ist als Saugrohr eines Verbrennungsmotors ausgebildet, bei dem ein aus Polyamid bestehendes Gehäuse 1 des Ladeluftkanals einen Sammlerbereich 2 umschließt, der mit einem Ladeluftaustritt 2a an einen Zylinderkopf eines Verbrennungsmotors, vorliegend eines Dieselmotors, angeflanscht wird.

Das Gehäuse 1 hat einen Eintritt 3, in die die von einem Verdichter, z.B. einem Abgasturbolader, verdichtete und erhitzte Ladeluft einströmt. Der Eintritt 3 hat vorliegend einen kreisrunden Querschnitt und verlängert sich zu einem zylindrischen Kanal 16, in dem ein nach Art einer Walze ausgeformtes Stellglied 4 positioniert ist. Das Stellglied 4 umfasst eine mittels eines nicht dargestellten Aktuators drehbare Hohlwalze, in deren Wandung eine Öffnung 5 vorgesehen ist. Die Wandung der Hohlwalze 4 stellt eine radial gerichtete Austrittsöffnung für die Ladeluft dar, die nach Eintritt in das Gehäuse zunächst axial in die Hohlwalze 4 einströmt und dann im Wesentlichen um 90° umgelenkt die Hohlwalze 4 durch die Öffnung 5 verlässt.

In dem zylindrischen Kanal 16 sind mehrere Durchtritte 12, 13, 28 vorgesehen, mit denen die Öffnung 5 je nach Drehstellung überdeckt. Um Leckströme von Ladeluft zu vermeiden, sind zudem mehrere Dichtungen 14 in der Wand des zylindrischen Kanals 16 angeordnet, die im vorliegenden Beispiel als an das Gehäusematerial angegossene Dichtungsstreifen ausgebildet sind.

Um dem Gehäuse 1 und insbesondere der Position der Dichtungen 14 eine ausreichende Stabilität gegenüber dem Ladeluftdruck und anderen Einflüssen zu verschaffen, ist zudem ein Zuganker 15 in der Nähe des zylindrischen Kanals 16 an dem Gehäuse 1 vorgesehen.

In einer ersten Stellung des Stellglieds gemäß Fig. 3 liegt die Öffnung 5 in Überdeckung mit einem ersten Durchtritt 12 in dem Gehäuse 1. Dabei strömt die Ladeluft aus der Öffnung 5 des Stellglieds 4 zu einem ersten, in dem Gehäuse 1 angeordneten, flassigkeitsgekuhlten Wärmetauscher 6, dem ein Umlenkbereich 7 und nach Umlenkung um 180° ein zweiter Wärmetauscher 8 folgt. Beim Durchströmen der Wärmetauscher 6, 8 wird Wärmeenergie der Ladeluft an das Kühlfluid der Wärmetauscher abgegeben.

Vorliegend sind die Wärmetauscher 6, 8 als verschiedene Bereiche bzw. Abschnitte eines einzelnen Wärmetauschereinsatzes 9 ausgebildet, der nur einen Zufluss und einen Abfluss für Kühlfluid hat. Alternativ können aber auch zwei separate Wärmetauscher vorgesehen sein, die jeweils einen Zufluss und einen Abfluss für identisches oder auch verschiedenes Kühlfluid haben. Hierdurch können die separaten Wärmetauscher insbesondere mit Kühlfluiden verschiedener Temperatur zur Effizienzsteigerung der Ladeluftkühlung betrieben werden. Die Bauform des Ladeluftkanals bezüglich der Wärmetauscher kann auch als U-flow-Kühler bezeichnet werden (siehe auch schematisches Beispiel nach Fig. 1).

Nach Austritt aus dem weiteren Wärmetauscher 8 durchströmt die Ladeluft den Sammlerbereich 2 und tritt dann in den Verbrennungsmotor ein.

In einer zweiten Stellung der Hohlwalze 4 ist der Weg zu dem ersten Durchtritt 12 durch die Wandung der Hohlwalze als Sperrfläche verschlossen, und die Öffnung 5 deckt sich mit einem zweiten Durchtritt, der der Beginn eines außen entlang führenden, kanalförmigen ersten Bypasses 13 ist. Der Bypass 13 mündet in den Umlenkbereich 7, also stromabwärts des ersten Wärmetauschers 6 und stromaufwärts des zweiten Wärmetauschers 8. Hierdurch wird in der zweiten Stellung des Stellglieds 4 nur der erste der beiden Wärmetauscher 6, 8 umgangen. Eine solche Betriebsart wird zum Beispiel bei einem Wechsel von Vollast auf Teillast gewählt. Hierdurch entfällt ein Teil der Ladeluftkühlung bzw. es wird unter Umständen sogar zunächst eine Aufreizung der im Teillastbetrieb weniger erwärmten Ladeluft durch den ersten Wärmetauscher 6 vermieden. Zugleich wird der Druckabfall durch Umgehung eines der Wärmetauscher reduziert, so dass insgesamt ein effektiverer Teillastbetrieb möglich wird.

In einer dritten Stellung der Hohlwalze 4 ist der Weg zu dem ersten Durchtritt 12 und zu dem zweiten Durchtritt 13 durch die Wandung der Hohlwalze als Sperrfläche verschlossen, und die Öffnung 5 deckt sich mit einem dritten Durchtritt 28, der als zweiter Bypass in einer an den zylindrischen Kanal 16 angrenzenden Wand des Sammlerbereichs 2 vorgesehen ist. In dieser Stellung strömt die Ladeluft somit unmittelbar von dem Eintritt 3 durch die Hohlwalze 4 in den Sammlerbereich 2, so dass keine Kühlung durch die Wärmetauscher 6,8 erfolgt. Eine solche Betriebsart wird zum Beispiel in einer Kaltstartphase gewählt, um ein schnelles Erreichen der Betriebstemperatur des Verbrennungsmotors zu ermöglichen.

Insbesondere kann der Ladeluft ein Anteil an rückgeführtem Abgas beigemengt sein. Die Zumischung des Abgases kann vor einem Eintritt in den erfindungsgemäßen Ladeluftkanal erfolgen oder auch in dem Ladeluftkanal selbst (nicht dargestellt).

Bei einer weiteren Stellung der Hohlwalze 4 liegt die Öffnung 5 gegenüber der Wand des zylindrischen Kanals 16, so dass ein vollständiger Verschluss bzw. eine vollständige Reduzierung des Durchtrittsquerschnitts der Ladeluft gegeben ist.

Bei einer nicht gezeigten Zwischenstellung kann die Öffnung 5 sich nur teilweise mit einem der Durchtritte 12, 13, 28 überlappen, so dass eine einstellbare, stufenlose Reduzierung des Durchtrittsquerschnitts bzw. eine einstellbare Drosselung des Ladeluftstroms erzielt wird. Um eine hohe Genauigkeit der Einstellung zu gewährleisten, hat die Sperrfläche bzw. Wandung der Hohlwalze angrenzend an die Öffnung 5 keine glatte Kante, sondern eine geometrische Struktur in Form einer Zahnung 14 (siehe Fig. 4). Die Zahnung kann zudem noch in Richtung zur Walzenmitte angewinkelt sein, damit die Walze 4 beim Drehen nicht an dem Gehäuse 1 hängen bleibt.

Für Benzinmotoren kann die Anwendung einer Walzendrossel aufgrund von Bauraumrestriktionen ebenfalls interessant sein, jedoch sollte hierzu eine genauere Drosselung, z.B. über größere Verzahnungen, möglich sein.

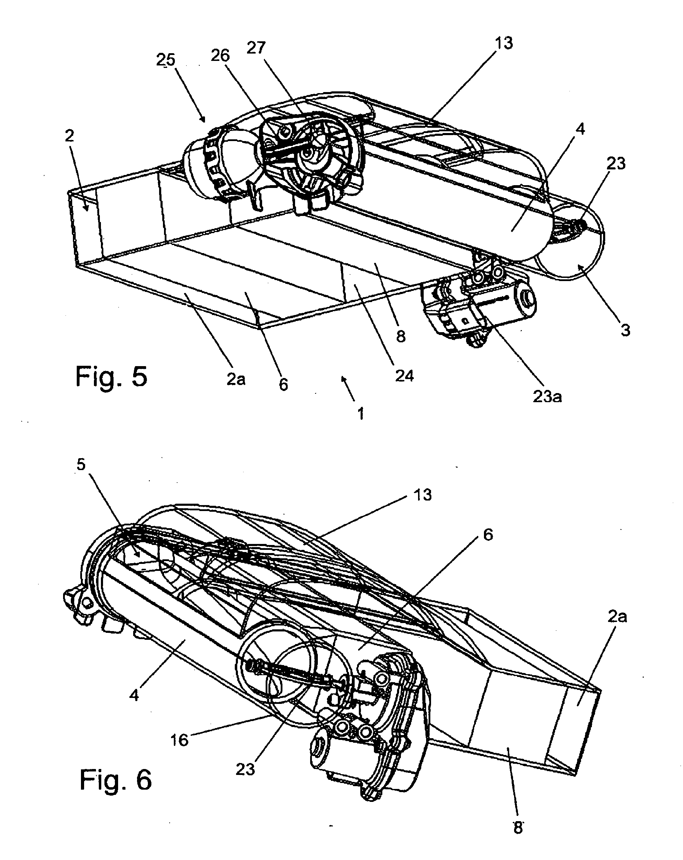

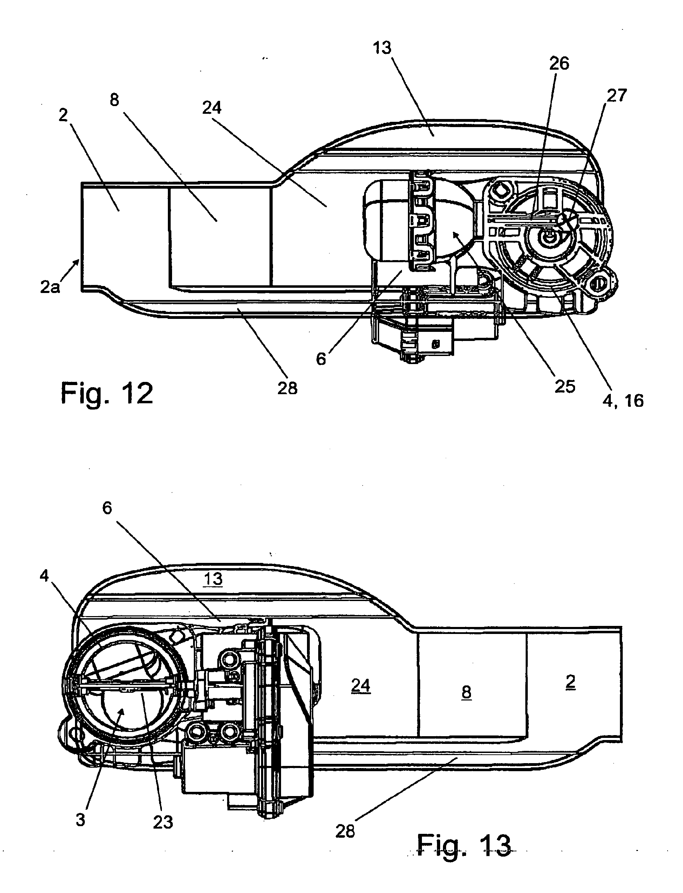

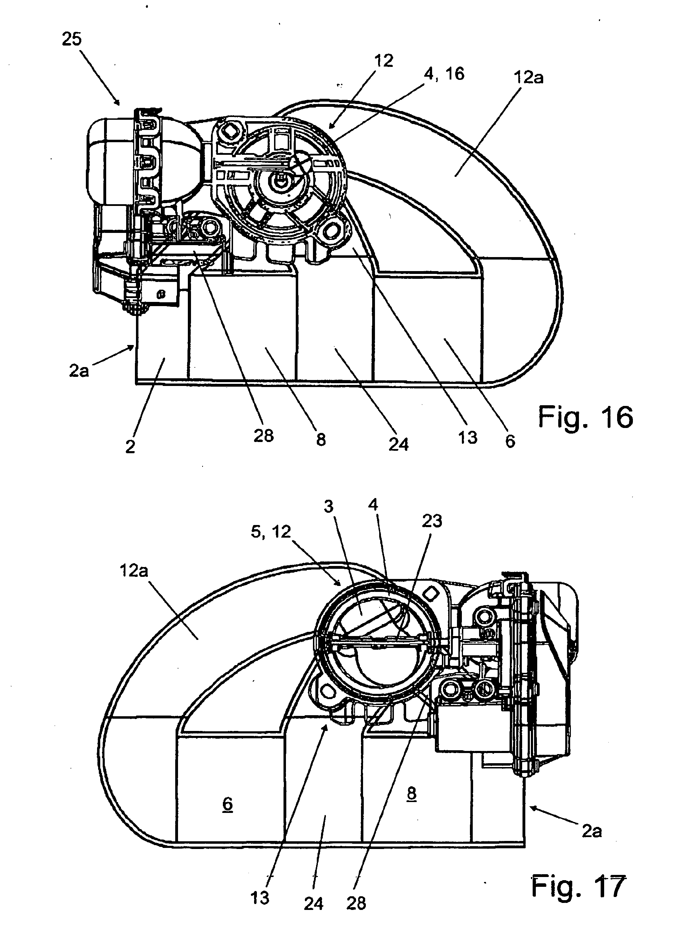

Sämtlichen der nachfolgend beschriebenen Ausführungsbeispiele nach Fig. 5 bis Fig. 17 ist gemeinsam, dass zur Montage an den Zylinderkopf eines Dreizylindermotors zwei vorliegend parallele Reihen von Verschraubungen 17 vorgesehen sind, nämlich zwei obere Verschraubungen 17a und zwei untere Verschraubungen 17b. Die zur Festlegung des Ladeluftkanals an dem Zylinderkopf dienenden Schrauben bzw. Zuganker selbst sind nicht dargestellt.

Die beiden parallelen Reihen von Verschraubungen haben vorliegend einen Abstand von 90 mm (Abstand der Kanalmitten). Der Außendurchmesser der Hohlwalze 4 ist in den Ausführungsbeispielen ähnlich und beträgt jeweils zwischen 60 mm und 65 mm.

Jedes der Ausführungsbeispiele Fig. 5 bis Fig. 17 hat, wie im ersten Ausführungsbeispiel, einen ersten Wärmetauscher 6 und einen zweiten Wärmetauscher 8. Ebenso liegen jeweils ein erster Durchtritt 12 und ein zweiter Durchtritt bzw. Bypass 13 vor, und die grundsätzliche Funktion des Stellglieds 4 in Form einer Hohlwalze 4 ist ebenfalls jeweils identisch.

Die Beispiele nach Fig. 5 bis Fig. 17 entsprechen jeweils dem Schema des Beispiels nach Fig. 2, bei dem die beiden Wärmetauscher 6, 8 in einer Ebene hintereinander angeordnet sind. Somit liegt kein Umlenkbereich zwischen den Wärmetauschern vor. Beide Wärmetauscher 6, 8 sind jeweils zwischen den Reihender Verschraubungen 17 angeordnet. Dies limitiert die Höhe der Wärmetauscher in einer Höhenrichtung H auf vorliegend weniger als 90 mm, ermöglicht aber meist eine Erstreckung in einer Längsrichtung L, die der gesamten Breite des Zylinderkopfes entspricht.

Die unteren Verschraubungen 17 verlaufen unterhalb des Ladeluftkanals und kollidieren je nach Ausführungsform nicht mit seinem Gehäuse. Sie können zum Beispiel an nicht gezeigten Befestigungslaschen am Rand des Ladeluftaustritts 2a zusammenwirken.

Die oberen Verschraubungen 17 verlaufen abschnittsweise in Ausnehmungen 18 in Form von Sicken, die materialeinheitlich einstückig in einem zweiten Umlenkbereich 19 des Ladeluftkanals ausgebildet sind, der zudem den Sammlerbereich 2 ausbildet. Bei sämtlichen der beschriebenen Ausführungsbeispiele besteht der Ladeluftkanal aus Kunststoff, so dass die Ausnehmungen 18 im Spritzgussverfahren ausformbar sind.

Bei jedem der Beispiele nach Fig. 5 bis Fig. 17 ist jeweils zumindest ein kanalförmiger Bypass 13 vorgesehen, der an dem walzenförmigen Stellglied 4 beginnt und stromabwärts des ersten Wärmetauschers 6, aber stromaufwärts des zweiten Wärmetauschers 8 mündet. Dabei ist der erste Wärmetauscher 6 jeweils als Hochtemperatur-Wärmetauscher ausgebildet, der in einen Kuhlkreislauf des Motor-Kuhlmittels integriert ist. Typische Kühlmitteltemperaturen bei betriebswarmem Motor betragen liegen hier im Bereich von 90 °C. Der nachfolgende, zweite Wärmetauscher 8 ist als Niedertemperatur-Wärmetauscher ausgebildet, der an einen Niedertemperaturzweig des Kühlkreislaufs angeschlossen ist. Die hier vorliegenden Kühlmitteltemperaturen sind deutlich niedriger und können die Temperatur der Umgebungsluft erreichen. Es ist alternativ oder ergänzend auch denkbar, dass der Niedertemperatur-Wärmetauscher von einem Kältemittel eines Kältekreises durchströmt wird.

Eine weitere Gemeinsamkeit der Ausführungsbeispiele nach Fig. 5 bis 17 besteht in einem stromaufwärts des walzenförmigen Stellglieds 4 angeordneten Drosselglied 23, das über einen elektromotorischen Aktuator 23a antreibbar verstellbar ist. Das Drosselglied 23a ist jeweils in dem gleichen zylindrischen Kanal 16 wie das walzenförmige Stellglied 4 angeordnet und als kreisförmige Drosselklappe ausgeformt, deren Welle den zylindrischen Kanal 16 quer durchgreift. Durch das Drosselglied 23a lässt sich der Eintritt 3 bzw. zylindrische Kanal 16 so vollständig absperren, dass zum Beispiel im Fall eines Dieselmotors ein Abstellen des Motors über die Drosselklappe geleistet werden kann. Dadurch kann bezüglich des Stellglieds 4 auf aufwendige Dichtungsmaßnahmen verzichtet werden, die bei Zielsetzung einer vollständigen Absperrbarkeit nur durch das Stellglied 4 sonst erforderlich wären. Zudem kann durch die Drosselklappe 23 eine Unterstützung der Drosselungseinstellung im Bereich extremer Drosselungen erreicht werden, zum Beispiel zur Erzeugung eines ausreichenden Unterdrucks für eine Hochdruck-Abgasrückführung im Teillastbereich stromabwärts des Stellglieds 4.

Im Fall des Ausführungsbeispiels nach Fig. 5 bis 9 ist der stromaufwärts des zweiten Wärmetauschers 8 mündende Bypass 13 der einzige Bypass des Ladeluftkanals. Die Ladeluft durchströmt somit in jeder Stellung des Stellglieds 4 immer zumindest den weiteren Wärmetauscher 8.

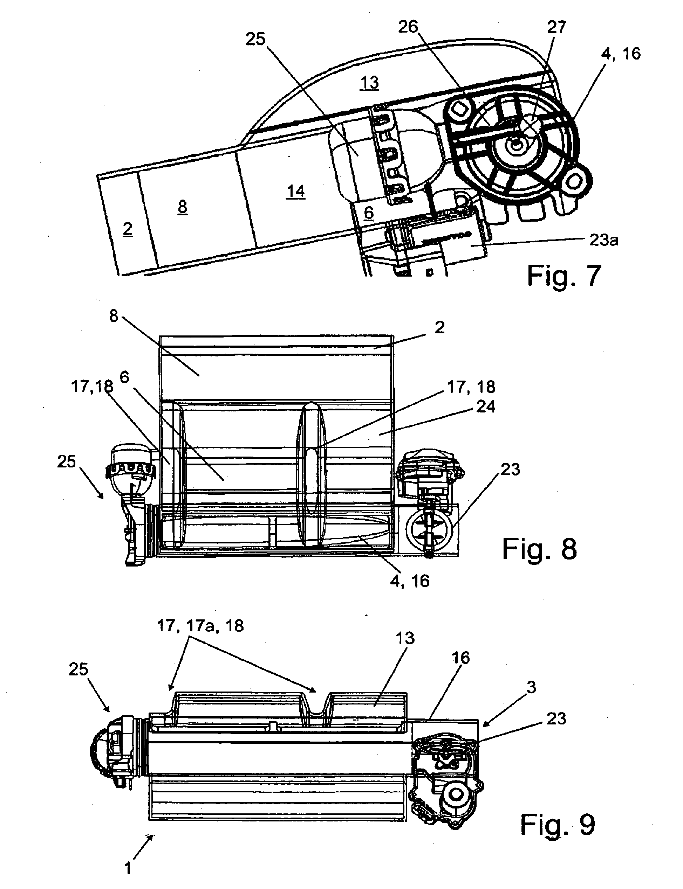

Der zylindrische Kanal 16 mit dem Stellglied 4 sowie die beiden Wärmetauscher 6, 8 befinden sich gemäß der seitlichen Draufsicht Fig. 7 im Wesentlichen in einer Ebene und sind in Strömungsrichtung der Ladeluft hintereinander angeordnet. Der Bypass 13 ist als oberhalb dieser Ebene verlaufender, flacher gebogener Kanal ausgeformt, der in einen Zwischenraum 24 zwischen den Wärmetauschern 6, 8 mündet.

In dem Bypass 13 sind Ausnehmungen 18 ausgebildet, mittels der das Gehäuse 1 durchgreifende obere Verschraubungen vorgesehen werden. Untere Verschraubungen verlaufen vollständig unterhalb des Gehäuses 1.

Weiterhin ist an dem Gehäuse 1 seitlich und an dem dem Drosselglied 23 gegenüberliegenden Endbereich des zylindrischen Kanals 16 ein elektromotorischer Aktuator 25 zur Betätigung des Stellglieds 4 angeordnet. Der Aktuator 25 umfasst eine linear verschiebliche Stange 26, die über eine Kugelkopflagerung mit einem exzentrisch zu der Drehachse der Walze 4 angeordneten Zapfen 27 des walzenförmigen Stellglieds verbunden ist. Mittels angetriebener Bewegung der Stange 26 wird der Zapfens 27 und mit diesem die Walze des Stellglieds 4 verstellt, so dass die verschiedenen vorstehend beschriebenen Führungen der Ladeluft einstellbar sind.

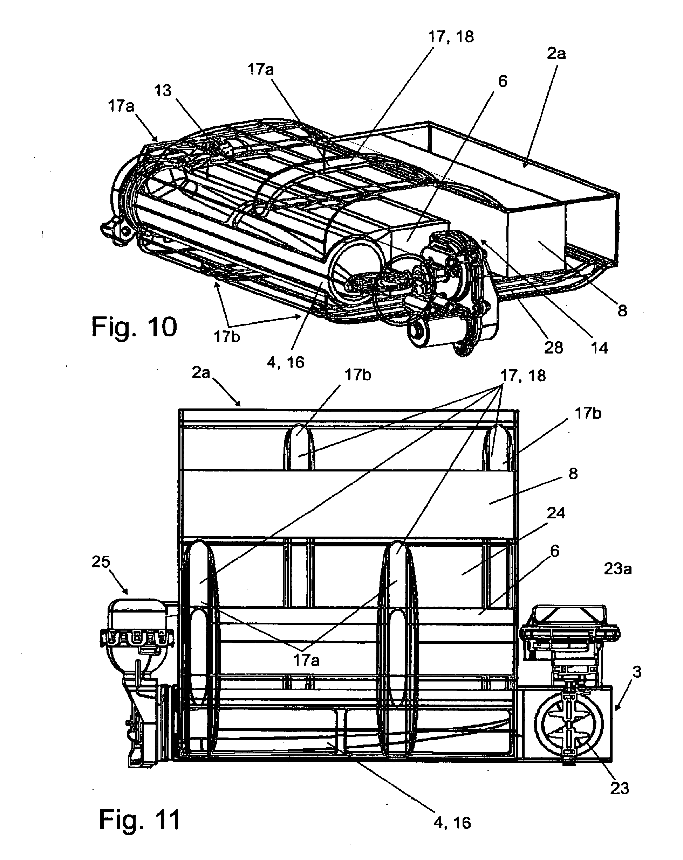

Bei dem Ausführungsbeispiel nach Fig. 10 bis 13 liegt im Unterschied zu dem Beispiel nach Fig. 5 bis Fig. 9 ein weiterer, zweiter Bypass 28 vor. Die Anordnung von Stellglied 4 und jedem der Wärmetauscher 6, 8 in einer Ebene ist ebenso beibehalten wie die Anordnung des ersten Bypasskanals 13 oberhalb dieser Ebene. Zusätzlich ist nun unterhalb der Ebene der Wärmetauscher 6, 8 der weitere Bypasskanal 28 in zu dem ersten Kanal ähnlicher, flacher und sich über die Breite des Gehäuses 1 erstreckender Ausformung vorgesehen. Der zweite Bypass 28 mündet stromabwärts beider Wärmetauscher 6, 8, so dass hierdurch eine Führung der Ladeluft unter vollständiger Umgehung sämtlicher Wärmetauscher 6, 8 ermöglicht ist.

Der zweite Bypasskanal 28 hat analog dem ersten Bypasskanal 13 Ausnehmungen 18, in denen die unteren Verschraubungen des Ladeluftkanals mit dem Verbrennungsmotor angeordnet sind.

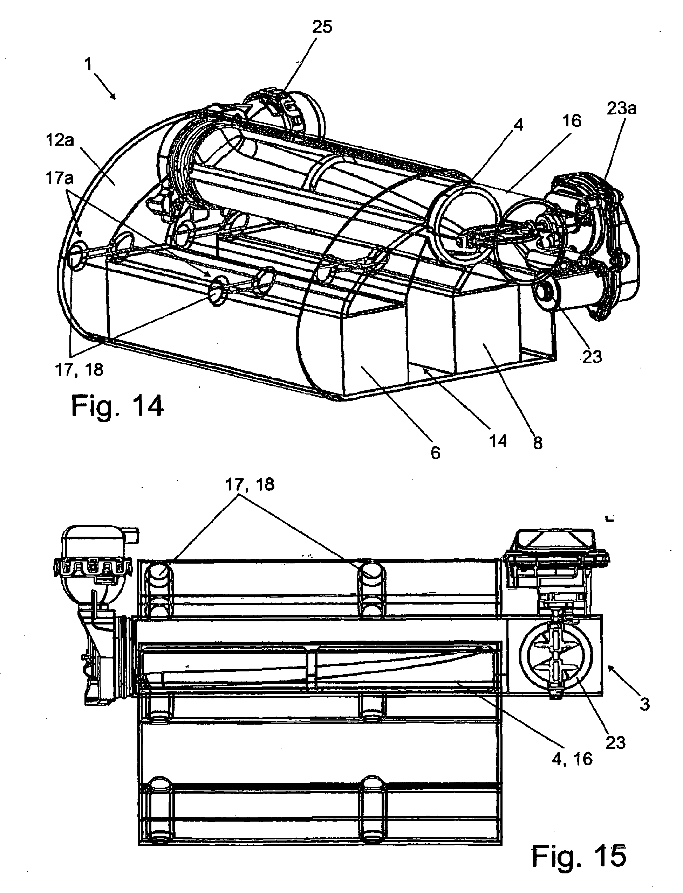

Insgesamt hat das Stellglied gemäß dem Ausführungsbeispiel nach Fig. 10 bis 13 somit eine zusätzliche vierte Stellung, in der die Ladeluft unter vollständiger Umgehung der Wärmetauscher 6, 8 durch den zweiten Bypass 28 geführt ist. Wie zuvor gilt: In der ersten Stellung des Stellglieds wird die Ladeluft vom Eintritt 3 durch sämtliche Wärmetauscher 6, 8 zum Austritt 2a geführt. In der zweiten Stellung wird die Ladeluft durch den ersten Bypass 13 unter zumindest teilweiser Umgehung des ersten Wärmetauschers, insbesondere unter vollständiger Umgehung des ersten Wärmetauschers 6, geführt. In der dritten Stellung des Stellglieds 4 erfolgt eine vollständige Umgehung beider Wärmetauscher 6, 8 mittels des zweiten Bypasses 28. Wie in sämtlichen der andere Ausführungsbeispiele kann in jeder der Stellungen eine gezielte Drosselung der geführten Ladeluft erfolgen, indem nur eine teilweise Überdeckung der Öffnungen mit der Walzenöffnung erfolgt. Fig. 14 bis 17 zeigen ein weiteres Ausführungsbeispiel der Erfindung, bei dem ebenso wie im vorhergehenden Beispiel nach Fig. 10-13 ein zweiter Bypass 28 und insgesamt eine identische Funktion des Ladeluftkanals vorliegt. Im Unterschied zum vorhergehenden Beispiel liegt eine andere räumliche Anordnung der Komponenten in dem Gehäuse vor, wodurch eine höhere und kürzere Bauform resultiert, die je nach Anforderungen vorteilhaft sein kann.

Dabei sind die beiden Wärmetauscher 6, 8 und der Austritt 2a weiterhin in einer Ebene hintereinander angeordnet. Das Stellglied 4 ist nicht in dieser Ebene angeordnet, sondern oberhalb. Von dem zylindrischen Kanal 16 des Stellglieds 4 zweigen fächerartig drei Kanäle ab, nämlich ein Hauptkanal 12a zur Führung der Ladeluft durch beide Wärmetauscher 6, 8, der erste Bypasskanal 13 zur Führung der Ladeluft vom Eintritt 3 zu einem Zwischenraum 24 zwischen den Wärmetauschern 6, 8 und der zweite Bypasskanal 28 zur Führung der Ladeluft vom Eintritt 3 zum Sammler 2 bzw. Austritt 2a unter vollständiger Umgehung beider Wärmetauscher 6, 8.

Bei diesem Beispiel liegen tunnelförmige Ausnehmungen 18 für eine Reihe der Verschraubungen vor, die das Gehäuse 1 zwischen der Ebene des Stellglieds und der Ebene der Wärmetauscher 6, 8 durchgreifen. In alternativer Gestaltung kann das Stellglied anstatt oberhalb der Wärmetauscher 6, 8 auch unterhalb der Wärmetauscher 6, 8 angeordnet sein (z.B. durch Umdrehen der Vorrichtung um 180°).

Für jedes der vorstehend beschriebenen Ausführungsbeispiele kann der erste Bypasskanal 13 und/oder -sofern vorhanden- der zweite Bypasskanal 28 mittels parallel zur Ladeluftströmung verlaufender Stege, wabenförmiger Ausformung der Kanäle oder ähnlicher Maßnahmen zur Verbesserung der Steifigkeit des Gehäuses 1 ausgebildet sein.

Es versteht sich, dass die Merkmale der einzelnen Ausführungsbeispiele je nach Anforderungen beliebig miteinander kombiniert werden können.

## Patentansprüche

1. Ladeluftkanal für einen Verbrennungsmotor, umfassend ein Gehäuse (1) mit zumindest einem Eintritt (3) und zumindest einem Austritt (2a) für Ladeluft, wobei in dem Gehäuse (1) ein erster Wärmetauscher (6, 8) zur Kühlung der Ladeluft angeordnet ist, wobei an dem Gehäuse (1) ein Bypass (13) zur zumindest teilweisen Umgehung des Wärmetauschers (6, 8) angeordnet ist, wobei an dem Gehäuse (1) ein Stellglied (4) zur Beeinflussung des Ladeluftstroms angeordnet ist, wobei in einer ersten Stellung des Stellglieds (4) die Ladeluft von dem Eintritt (3) zu dem ersten Wärmetauscher (6, 8) geführt ist, und wobei in einer zweiten Stellung des Stellglieds (4) die Ladeluft von dem Eintritt (3) zu dem Bypass (13) geführt ist, **dadurch gekennzeichnet, dass** der Bypass (13) stromaufwärts eines zweiten Wärmetauschers (8) des Ladeluftkanals mündet, wobei weiterhin ein zweiter Bypass (28) vorgesehen ist, wobei der zweite Bypass (28) stromabwärts des zweiten Wärmetauschers (8) mündet und die Ladeluft in einer dritten Stellung des Stellglieds von dem Eintritt (3) zu dem zweiten Bypass (28) strömt.

2. Ladeluftkanal nach Anspruch 1, **dadurch gekennzeichnet, dass** der erste Wärmetauscher (6) als Hochtemperatur-Wärmetauscher und der zweite Wärmetauscher (8) als Niedertemperatur-Wärmetauscher ausgebildet ist.

3. Ladeluftkanal nach einem der vorhergehenden Ansprüche 1 oder 2, **dadurch gekennzeichnet, dass** der Ladeluftkanal als Saugrohr des Verbrennungsmotors ausgebildet ist.

4. Ladeluftkanal nach einem der vorhergehenden Ansprüche, **dadurch gekennzeichnet, dass** das Stellglied (4) in einem insbesondere im Wesentlichen zylindrischen Kanal (16) angeordnet ist, wobei insbesondere der Ladeluftstrom im Bereich des Kanals (16) um etwa 90°umgelenkt wird.

5. Ladeluftkanal nach einem der vorhergehenden Ansprüche, **dadurch gekennzeichnet, dass** das Stellglied (4) als um eine Achse drehbare Walze ausgebildet ist

6. Ladeluftkanal nach einem der vorhergehenden Ansprüche, **dadurch gekennzeichnet, dass** das Stellglied (4) eine Sperrfläche aufweist, wobei die Sperrfläche eine geometrische Struktur (14) zur Reduzierung des Durchtrittsquerschnitts aufweist.

7. Ladeluftkanat nach einem der vorhergehenden Ansprüche, **dadurch gekennzeichnet, dass** das Gehäuse (1) über zwei insbesondere parallelen Reihen (17a, 17b) von Verschraubungen (17) an dem Verbrennungsmotor festlegbar ist, wobei insbesondere zumindest eine der Verschraubungen (17) einen Teil des Gehäuses durchgreift.

8. Ladeluftkanal nach Anspruch 7, **dadurch gekennzeichnet, dass** zumindest einer der Wärmetauscher (6, 8) zwischen den parallelen Reihen von Verschraubungen (17a, 17b) angeordnet ist.

9. Ladeluftkanal nach einem der vorhergehenden Ansprüche, **dadurch gekennzeichnet, dass** der Ladeluftstrom nach dem stromaufwärtigen der beiden Wärmetauscher (6) und vor dem stromabwärtigen der beiden Wärmetauscher (8) eine Umlenkung, insbesondere um 180°, erfährt.

10. Ladeluftkanal nach einem der vorhergehenden Ansprüche, **dadurch gekennzeichnet, dass** das Stellglied (4) im Wesentlichen in einer Ebene mit den beiden Wärmetauschern (6, 8) angeordnet ist, insbesondere zudem in einer Ebene mit dem Austritt (2a) des Ladeluftkanals.

11. Ladeluftkanal nach einem der vorhergehenden Ansprüche, **dadurch gekennzeichnet, dass** die beiden Wärmetauscher (6, 8) und der Austritt (2a) im Wesentlichen in einer Ebene angeordnet sind, wobei das Stellglied (4) außerhalb dieser Ebene, insbesondere vollständig oberhalb oder vollständig unterhalb der Ebene, angeordnet ist.

12. Ladeluftkanal nach einem der vorhergehenden Ansprüche, **dadurch gekennzeichnet, dass** zusätzlich zu dem Stellglied (4) ein Drosselglied (23) vorgesehen ist:

## Claims

1. A charge air duct for an internal combustion engine, comprising a housing (1) having at least one inlet (3) and at least one outlet (2a) for charge air, wherein a first heat exchanger (6, 8) is disposed in the housing (1) to cool the charge air, wherein a bypass (13) is disposed on the housing (1) to at least partially circumvent the heat exchanger (6, 8), wherein an actuator (4) is disposed on the housing (1) to influence the charge air flow, wherein the charge air is guided from the inlet (3) to the first heat exchanger (6, 8) in a first position of the actuator (4), and wherein the charge air is guided from the inlet (3) to the bypass (13) in a second position of the actuator (4), **characterized in that** the bypass (13) leads upstream of a second heat exchanger (8) of the charge air duct, wherein furthermore a second bypass (28) is provided, wherein the second bypass (28) leads downstream of the second heat exchanger (8) and the charge air flows from the inlet (3) to the second bypass (28) in a third position of the actuator.

2. The charge air duct according to claim 1, **characterized in that** the first heat exchanger (6) is in the form of a high temperature heat exchanger, and the second heat exchanger (8) is in the form of a low temperature heat exchanger.

3. The charge air duct according to one of the preceding claims 1 or 2, **characterized in that** the charge air duct is in the form of an intake manifold of the internal combustion engine.

4. The charge air duct according to one of the preceding claims, **characterized in that** the actuator (4) is disposed in a duct (16) which is substantially cylindrical in particular, wherein the charge air flow is redirected by approximately 90° in the region of the duct (16) in particular.

5. The charge air duct according to one of the preceding claims, **characterized in that** the actuator (4) is in the form of a roller which is rotatable about an axis.

6. The charge air duct according to one of the preceding claims, **characterized in that** the actuator (4) comprises a blocking surface, wherein the blocking surface has a geometric structure (14) to reduce the flow cross-section.

7. The charge air duct according to one of the preceding claims, **characterized in that** the housing (1) can be attached to the internal combustion engine via two parallel, in particular, rows (17a, 17b) of screw connections (17), wherein, in particular, at least one of the screw connections (17) extends through a part of the housing.

8. The charge air duct according to claim 7, **characterized in that** at least one of the heat exchangers (6, 8) is disposed between the parallel rows of screw connections (17a, 17b).

9. The charge air duct according to one of the preceding claims, **characterized in that** the change air flow is redirected, in particular by 180°, after the heat exchanger (6) of the two that is upstream, and before the heat exchanger (8) of the two that is downstream.

10. The charge air duct according to one of the preceding claims, **characterized in that** the actuator (4) is disposed substantially in a plane with the Lwo heat exchangers (6, 8), in particular also in a plane with the outlet (2a) of the charge air duct.

11. The charge air duct according to one of the preceding claims, **characterized in that** the two heat exchangers (6, 8) and the outlet (2a) are disposed substantially in a plane, wherein the actuator (4) is disposed outside of this plane, in particular entirely above or entirely below the plane.

12. The charge air duct according to one of the preceding claims, **characterized in that** a throttle element (23) is provided in addition to the actuator (4).

## Revendications

1. Conduit d'air de suralimentation pour un moteur à combustion interne, comprenant un carter (1) comportant au moins une entrée (3) et au moins une sortie (2a) pour de l'air de suralimentation, où un premier échangeur de chaleur (6, 8) servant au refroidissement de l'air de suralimentation est disposé dans le carter (1), où une dérivation (13) servant au contournement au moins partiel de l'échangeur de chaleur (6, 8) est disposée sur le carter (1), où un actionneur (4) servant à influencer le flux d'air de suralimentation est disposé sur le carter (1), où, dans une première position de l'actionneur (4), l'air de suralimentation est guidé depuis l'entrée (3) jusqu'au premier échangeur de chaleur (6, 8) et où, dans une deuxième position de l'actionneur (4), l'air de suralimentation est guidé depuis l'entrée (3) jusqu'à la dérivation (13), **caractérisé en ce que** la dérivation (13) débouche en amont d'un deuxième échangeur de chaleur (8) du conduit d'air de suralimentation, où il est prévu en outre une deuxième dérivation (28), où la deuxième dérivation (28) débouche en aval du deuxième échangeur de chaleur (8), et l'air de suralimentation, dans une troisième position de l'actionneur, s'écoule depuis l'entrée (3) jusqu'à la deuxième dérivation (28).

2. Conduit d'air de suralimentation selon la revendication 1, **caractérisé en ce que** le premier échangeur de chaleur (6) est conçu comme un échangeur de chaleur à haute température, le deuxième échangeur de chaleur (8) étant conçu comme un échangeur de chaleur à basse température.

3. Conduit d'air de suralimentation selon l'une des revendications précédentes 1 ou 2, **caractérisé en ce que** le conduit d'air de suralimentation est conçu comme un collecteur d'admission du moteur à combustion interne.

4. Conduit d'air de suralimentation selon l'une quelconque des revendications précédentes, **caractérisé en ce que** l'actionneur (4) est disposé dans un conduit en particulier pratiquement cylindrique (16), où en particulier le flux d'air de suralimentation est dévié à peu près de 90° dans la zone du conduit (16).

5. Conduit d'air de suralimentation selon l'une quelconque des revendications précédentes, **caractérisé en ce que** l'actionneur (4) est conçu comme un cylindre tournant autour d'un axe.

6. Conduit d'air de suralimentation selon l'une quelconque des revendications précédentes, **caractérisé en ce que** l'actionneur (4) présente une surface d'arrêt, où la surface d'arrêt présente une structure géométrique (14) servant à la réduction de la section de passage.

7. Conduit d'air de suralimentation selon l'une quelconque des revendications précédentes, **caractérisé en ce que** le carter (1) peut être fixé sur le moteur à combustion interne, par deux rangées (17a, 17b) - en particulier parallèles - de fixations par vis (17), où en particulier au moins l'une des fixations par vis (17) pénètre dans une partie du carter.

8. Conduit d'air de suralimentation selon la revendication 7, **caractérisé en ce qu'**au moins l'un des échangeurs de chaleur (6, 8) est disposé entre les rangées parallèles de fixations par vis (17a, 17b).

9. Conduit d'air de suralimentation selon l'une quelconque des revendications précédentes, **caractérisé en ce que** le flux d'air de suralimentation subit un retour de flux, en particulier de 180°, en aval de celui des deux échangeurs de chaleur (6) situé en amont, et en amont de celui des deux échangeurs de chaleur (8) situé en aval.

10. Conduit d'air de suralimentation selon l'une quelconque des revendications précédentes, **caractérisé en ce que** l'actionneur (4) est disposé pratiquement dans un plan formé par les deux échangeurs de chaleur (6, 8), étant en particulier disposé en outre dans un plan formé par la sortie (2a) du conduit d'air de suralimentation.

11. Conduit d'air de suralimentation selon l'une quelconque des revendications précédentes, **caractérisé en ce que** les deux échangeurs de chaleur (6, 8) et la sortie (2a) sont disposés pratiquement dans un plan, où l'actionneur (4) est disposé à l'extérieur de ce plan, en particulier totalement au-dessus ou totalement au-dessous du plan.

12. Conduit d'air de suralimentation selon l'une quelconque des revendications précédentes, **caractérisé en ce qu'**il est prévu un élément d'étranglement (23), en plus de l'actionneur (4).
